(19) Europäisches Patentamt

European Patent Office

Office européen des brevets

(11) Veröffentlichungsnummer: **0 000 147**
**B1**

(12) **EUROPÄISCHE PATENTSCHRIFT**

(21) Anmeldenummer: **78100159.9**

(22) Anmeldetag: **15.06.78**

(51) Int. Cl.³: **D 04 H 1/64, C 08 G 18/38**

(54) Verfahren zur Herstellung von Mineralfasermatten

(30) Priorität: **22.06.77 DE 2728074**

(43) Veröffentlichungstag der Anmeldung:
**10.01.79 Patentblatt 79/01**

(45) Bekanntmachung des Hinweises auf die Patenterteilung:
**23.07.80 Patentblatt 80/15**

(84) Benannte Vertragsstaaten:
**BE DE FR NL SE**

(56) Entgegenhaltungen:
**FR - A - 1 564 346**

(73) Patentinhaber: **BAYER AG**
**Zentralbereich Patente, Marken und Lizenzen**
**D - 5090 Leverkusen 1**
**Bayerwerk (DE)**

(72) Erfinder: **Welte, Rainer, Dr.**
**Kaiserstrasse 7**
**D - 5090 Leverkusen (DE)**
**Markusch, Peter Dr.**
**c/o Mobay Chemical Corporation**
**New Martinsville**
**W.Va 26155 (US)**
**Dieterich, Dieter Dr.**
**Ludwig-Girtler-Strasse 1**
**D - 5090 Leverkusen (DE)**
**Dietrich, Werner, Dr.**
**Fürvelser Strasse 25**
**D - 5000 Köln 80 (DE)**

Courier Press, Leamington Spa, England.

Verfahren zur Herstellung von Mineralfasermatten

Es ist bekannt, zur Herstellung von Glasfaser - Dämmstoffen Glas- bzw. Steinwollefilze mit wasserhaltigen Klebstoffen auf Basis von Phenol - Formaldehyd - Harzen oder Harnstoff - Formaldehyd - Harzen zu besprühen, um eine Verfestigung zu erreichen. Dabei müssen recht hoch wasserhaltige Klebstoffe verwendet werden, da der Klebstoff auf die noch hoch erhitzte Glas- bzw. Gesteinmasse aufgebracht wird und bei niedrigem Wassergehalt thermische Zersetzungen beobachtet werden. Das dabei aufgebrachte Wasser wird bei der anschließenden Aushärtung der Klebstoffe verdampft und als Abluft abgegeben.

Dabei läßt es sich nicht vermeiden, daß Teile der Klebstoffkomponenten mit der Abluft zusammen verlorengehen. Dies ist wirtschaftlich nachteilig, da dieser Teil des Klebstoffs bei der Bindung verlorengeht; vor allem aber hat dieses Verfahren dann beachtliche Nachteile, wenn physiologisch bedenkliche und leicht flüchtige Komponenten mit abgeblasen werden, z.B. bei Formaldehyd enthaltenden Klebstoffen.

Aus wirtschaftlichen und ökologischen Gründen ist es daher außerordentlich erwünscht, den Anteil leicht flüchtiger Klebstoff - Bestandteile in der Abluft zu verringern, ohne indes die gewünschten Klebeeigenschaften zu verlieren.

Die Lösung dieser Aufgabe wird mit der vorliegenden Erfindung erreicht.

Überraschend wurde gefunden, daß Emulsionen von Isocyanaten mit Wasserglas außerordentlich gute Bindemittel für die Verfestigung von Mineralfasern zwecks Herstellung von Mineralfasermatten darstellen, die außer Wasser keine flüchtigen Bestandteile enthalten.

Gegenstand der vorliegenden Erfindung ist daher ein Verfahren zur Herstellung von Mineralfasermatten durch Verklebung von Mineralfasern mit Bindemitteln, dadurch gekennzeichnet, daß als Bindemittel eine Emulsion von Wasserglas und Isocyanat eingesetzt wird, die in einem vorgeschalteten Mischaggregat hergestellt worden ist. Das Verhältnis Isocyanat: Wasserglas beträgt 1:1 bis 1:20 Gew.-%.

Die Kombination von Wasserglas und Isocyanat als Klebstoff ist bekannt, z.B. aus der französischen Patentschrift 1 362 003 und aus der DE—OS 1 770 384. Solche gleichzeitige Verwendung von Isocyanaten mit Wasserglas ist technisch jedoch wertlos, da die Verwendung der Produkte nebeneinander zwar zu Klebungen benutzt werden können, jedoch ist die Qualität der Klebung nicht höher als die bei alleiniger Benetzung der beiden Komponenten.

Überraschend zeigte sich demgegenüber, daß bei einer mechanischen Vermischung der beiden Komponenten in üblichen Mischaggregaten stabile Emulsionen Isocyanat/Wasserglas entstehen, die sich hervorragend zum Verkleben von Mineralfasern zwecks Herstellung von Mineralfasermatten eignen. Diese Emulsionen sind zwar hochviskos, können jedoch noch gut mit Pumpen gefördert werden. Trotz der verhältnismäßig hohen Viskosität zeigt sich, daß diese Emulsionen sich mit Luft außerordentlich gut verteilen lassen, wobei der Verteilungsgrad wesentlich besser sein kann als bei der Verwendung von sehr dünnviskosen Klebstoffzubereitungen.

Es zeigt sich, daß die erfindungsgemäß zu verwendenden Emulsionen gerade zu den Oberflächen der Mineralfasern eine besonders gute Haftung besitzen.

Als Wasserglas kommen erfindungsgemäß alle üblichen handelsüblichen Wassergläser in Frage, wobei die Natron- und Kaliwassergläser bevorzugt werden, es können jedoch ebenso andere Alkali- und/oder Ammoniumsilikatlösungen oder Mischungen dieser Substanzen eingesetzt werden. Es ist dabei nicht erheblich, ob die Silikatlösungen in Form echter wäßriger Silikatlösungen oder ganz oder teilweise in Form kolloidaler Lösungen vorliegen.

Es können ohne Nachteile auch rohe technische Silikatlösungen eingesetzt werden, welche zusätzliche Beimengungen bzw. Verunreinigungen besitzen, wie z.B. Calciumsilikate, Magnesiumsilikate, Borate oder Aluminate.

Bevorzugt werden handelsübliche Wassergläser eingesetzt, die ein Alkalioxid - Siliciumdioxid - Verhältnis von 1:1,8 bis 1:4,1 besitzen und Gesamtfeststoffanteile von in der Regel 28—55%.

Die Konzentration der eingesetzten Wassergläser kann ganz nach den Erfordernissen der Viskosität oder nach dem benötigten Wassergehalt variiert werden, berorzugt werden jedoch Wassergläser mit einem Feststoffgehalt von 40—55 Gew.-% oder Wassergläser mit einer Viskosität von mindestens 100 Cp/25°C.

Besonders bevorzugt sind Wassergläser mit einem Feststoffgehalt von 44—55 Gew.-%, oder Wassergläser mit einer Viskosität von mindestens 400 cP/25°C.

Die Natur der zur Herstellung der Dispersionen eingesetzten Isocyanate ist nicht kritisch, allerdings sollten sie zweckmäßig einen so hohen Siedepunkt besitzen, daß sie bei 100°C nicht in wesentlichem Umfang verdampfen. Damit wird vermieden, daß bei Aufbringenoder Aushärten des Klebstoffs wesentliche Mengen mit der Abluft abgeblasen werden wie das bei konventionellen Klebstoffen der Fall sein kann.

Als Isocyanate kommen in Frage: Monoisocyanate wie n - Octylisocyanat, Cyclohexylisocyanat, Phenylisocyanat, Polyisocyanate wie aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise 1,6 -

Hexamethylendiisocyanat, 1,12 - Dodecandiisocyanat, Cyclobutan - 1,3 - diisocyanat, Cyclohexan-1,3- und -1,4 - diisocyanat sowie beliebige Gemische dieser Isomeren, 1 - Isocyanato - 3,3,5 - trimethyl - 5 - isocyanatomethyl - cyclohexan (DAS 1 202 785, amerikanische Patentschrift 3 401 190), 2,4- und 2,6 - Hexahydrotoluylendiisocyanat sowie be-liebige Gemische dieser Isomeren, Hexa-hydro - 1,3- und/oder -1,4 - phenylen - diisocyanat, Perhydro -2,4'- und/oder -/4,4' - diphenylmethan - diisocyanat, 1,3- und 1,4 - Phenylendiisocyanat, 2,4- und 2,6 - Toluylendiisocyanat sowie beliebige Gemische dieser Isomeren, Diphenylmethan - 2,4'- und/oder - 4,4' - diisocyanat, Naphthylen - 1,5 - diisocyanat, Triphenylmethan - 4,4',4" - triiso-cyanat, Polyphenyl - polymethylen - polyiso-cyanate, wie sie durch Anilin - Formaldehyd - Kondensation und anschließende Phosgenierung erhalten und z.B. in den britischen Patentschriften 874 430 und 848 671 be-schrieben werden, m- und p - Isocyanato-phenylsulfonyl - isocyanate gemäß der ameri-kanischen Patentschrift 3 454 606, perchlorierte Arylpolyisocyanate, wie sie z.B. in der deutschen Auslegeschrift 1 157 601 (amerikanische Patentschrift 3 277 138) beschrieben werden, Carbodiimidgruppen aufweisende Polyisocyanate, wie sie in der deutschen Patentschrift 1 092 007 (amerikanische Patentschrift 3 152 162) beschrieben werden, Diisocyanate, wie sie in der amerikanischen Patentschrift 3 492 330 beschrieben werden, Allophanatgruppen aufweisende Polyisocyanate, wie sie z.B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z.B. in der amerikanischen Patentschrift 3 001 973, in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394 (amerikanische Patentschriften 3 124 605 und 3 201 372) sowie in der britis-chen Patentschrift 889 050 beschrieben werden, durch Telomerisationsreaktionen hergestellte Polyisocyanate, wie sie z.B. in der amerikanischen Patentschrift 3 654 106 beschrieben werden, Estergruppen aufweisend Polyisocyanate, wie sie zum Beispiel in den britischen Patentschriften 965 474 und 1 072 956, in der amerikanischen Patentschrift 3 567 763 und in der deutschen Patentschrift 1 231 688 genannt werden, Umsetzungsprodukte der obengenannten Isocyanate mit Acetalen gemäß der deutschen Patentschrift 1 072 385 und polymere Fettsäurereste enthal-tende Polyisocyanate gemäß der amerika-nischen Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6, - Toluylendiisocyanat sowie beliebige Gemische dieser Isomeren ("TDI"), Polyphenyl - polymethylen - polyisocyanate, wie sie durch Anilin - Formaldehyd - Kondensation und anschließende Phosgenierung hergestellt werden ("rohes MDI") und Carbodiimidgruppen, Urethangruppen, Allo-phanatgruppen, Isocyanuratgruppen, Harn-stoffgruppen der Biuretgruppen aufweisenden Polyisocyanate ("modifizierte Polyisocyanate").

Als Mineralfasern kommen alle an sich bekannten Mineralfasern wie Glas-, Asbest-, Gesteinsfasern, vorzugsweise Glasfasern, in Frage.

Erfindungsgemäß ist es auch möglich, Zusatzmittel einer der beiden Komponenten der Emulsion zuzusetzen. Dabei können diese Zusatzmittel in Form einer Lösung in einer der beiden Komponenten vorleigen, oder selbst in Form einer Emulsion oder Dispersion in einer der beiden Komponenten vorliegen.

Die Art und der Zweck der Zusatzmittel richtet sich nach der speziellen Ausführungsform des erfindungsgemäßen Verfahrens. So können alle üblichen Emulgierhilfsmittel eingesetzt werden, um die entstehende Emulsion weiter zu stabilisieren. Dabei wird man mit sehr geringen Mengen von 0,01—1,00 Gew.-%, bezogen auf die Emulsion, auskommen, da die hergestellten Emulsionen schon ohne Hilfsemulgator außerordentlich stabil sind.

Erfindungsgemäß werden ferner oft Katalysatoren mitverwendet. Als mitzuverwendende Katalysatoren kommen solche der an sich bekannten Art infrage, z.B. tertiäre Amine, wie Triäthylamin, Tributylamin, N - Methyl - morpholin, N - Äthyl - morpholin, N - Cocomorpholin, N,N,N',N' - Tetramethyl - äthylendiamin, 1,4 - Diaza - bicyclo - (2,2,2) - octan, N - Methyl - N' - dimethyl-aminoäthyl - piperazin, N,N - Dimethylbenzyl-amin, Bis - (N,N - diäthylaminoäthyl) - adipat, N,N - Diäthylbenzylamin, Pentamethyl diäthylentriamin, N,N - Dimethylcyclohexylamin, N,N,N',N' - Tetramethyl - 1,3 - butandiamin, N,N - Dimethyl - ß - phenyläthylamin, 1,2 - Dimethylimidazol, 2 - Methylimidazol. Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon, Cyclohexanon und Phenolen, wie Phenol, Nonylphenol, Bisphenol in Frage.

Gegenüber Isocyanatgruppen aktive Wasserstoffatome aufweisende tertiäre Amine als Katalysatoren sind z.B. Triäthanolamin, Triisopropanolamin, N - Methyl - diäthanolamin, N - Äthyl - diäthanolamin, N,N - Dimethyl - äthanolamin, sowie deren Umsetzungsprodukte mit Alkylenoxiden, wie Propylenoxid und/oder Äthylenoxid.

Als Katalysatoren kommen ferner Silaamine mit Kohlenstoff - Silizium - Bindungen, wie sie z.B. in der deutschen Patentschrift 1 229 290 (entsprechend der amerikanischen Patentschrift 3 620 984) beschrieben sind, in Frage, z.B. 2,2,4 - Trimethyl - 2 - silamorpholin, 1,3 - Diäthylaminomethyl - tetra - methyl - disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, als Katalysatoren verwendet werden.

Als organische Zinnverbindungen kommen vorzugsweise Zinn(II) - salze von Carbonsäuren wie Zinn(II) - acetat, Zinn(II) - octoat, Zinn(II) - äthylhexoat und Zinn(II) - laurat und die Zinn(IV) - Verbindungen, z.B. Dibutylzinnoxid, Dibutylzinndichlorid, Dibutylzinndiacetat, Dibutylzinndilaurat, Dibutylzinnmaleat oder Dioctylzionndiacetat in Betracht. Selbstverständlich können alle obengenannten Katalysatoren als Cemische eingesetzt werden.

Weitere Vertreter von erfindungsgemäß zu verwendenden Katalysatoren sowie Einzelheiten über die Wirkungsweise der Katalysatoren sind im Kungststoff - Handbuch, Band VII, herausgegeben von Vieweg und Höchtlen, Carl - Hanser - Verlag, München 1966, z.B. auf den Seiten 96 bis 102 beschrieben.

Die Katalysatoren werden in der Regel in einer Menge zwischen etwa 0,001 und 10 Gew.-%, bezogen auf die Emulsion, eingesetzt.

Erfindungsgemäß können auch oberflächenaktive Zusatzstoffe, wie Emulgatoren mitverwendet werden. Als Emulgatoren kommen z.B. die Natriumsalze von Ricinusölsulfonaten oder Salze von Fettsäuren mit Aminen wie ölsaures Diäthylamin oder stearinsaures Diäthanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Erfindungsgemäß können ferner auch Reaktionsverzögerer, z.B. sauer reagierende Stoffe wie Salzsäure oder organische Säurehalogenide mitverwendet werden.

Weitere Beispiele von gegebenenfalls erfindungsgemäß mitzuverwendenden Zusatzstoffen sowie Einzelheiten über Verwendungs- und Wirkungsweise dieser Zusatzmittel sind im Kunststoff-Handbuch, Band VII, herausgegeben von Vieweg und Höchtlen, Carl - Hanser - Verlag, München 1966, z.B. auf den Seiten 103 bis 113 beschrieben.

Auch Zusätze, die eine Aushärtung des Wasserglases bewirken, Zusätze, die die Klebrigkeit der entstehenden Emulsionen erhöhen wie Latices, Füllstoffe zum Strecken oder zur Verbindung des Schrumpfes sowie evtl. Bläh- oder Treibmittel können der Emulsion einverleibt werden.

Beispiel 1

100 Gew.-Tle. Wasserglas mit einem Feststoffgehalt von 45% (Molverhältnis $Na_2O$:- $SiO_2 = 1$:2) wurden mit 100 Gew.-Tln. Polyphenylpolymethylenpolyisocyanat 15 Sekunden intensiv mit einem Rührer bei 2000 Upm vermischt. Man erhält eine hellbraune Emulsion von ca. 40 000 cP, die länger als 30 Minuten verarbeitet werden kann. Danach steigt die Viskosität langsam über 1000P/25°C.

Beispiel 2

100 Gew.-Tle. Wasserglas gemäß Beispiel 1, gefördert mit einer Hochdrukkolbenpumpe bei 90 bar, werden mit 25 Gew.-Tle. Polyisocyanat gemäß Beispiel 1, das ebenfalls über eine Hockdruckkolbenpumpe bei 120 bar gefördert wird, vermischt, wobei ein Stachelrührer von 2000 Upm die Vermischung besorgt. In Abhängigkeit von der Zeit mißt man folgende Viskositäten)bei 25°C):

| sofort | 10 Poise |
|---|---|
| 1' | 15 Poise |
| 2' | 17 Poise |
| 4' | 20 Poise |
| 8' | 25 Poise |
| 60' | ca.100 Poise |

Beispiel 3

100 Gew.-Tle Wasserglass von 41% Feststoffgehalt (Molverhältnis $Na_2O$:$SiO_2 = 1$:3,1) werden mit 50 Gew.-Tln. Polyisocyanat gemäß Beispiel 1 mit einem Stachelrührer bei 1500 Upm vermischt, wobei die Förderung über zwei Niederdruckzahnradpumpen erfolgt. Man erhält eine hellbraune Emulsion.

Beispiel 4

Eine Dispersion nach Beispiel 2 wird einer handelsüblichen Sprühdüse zugeführt und dort mit Druckluft zu feinen Partikeln zerstäubt. Die Sprühdüse wird dabei vor die Spinnräder einer

# 0 000 147

handelsüblichen Mineralfaserspinnmaschine im Abstand von ca. 10 cm angebracht. Das Zuführungsrohr zur Düse wird durch einen äußeren Luftmantel gekühlt, durch den die zur Versprühung erforderliche Luft geführt wird.

Nach der Aushärtung erhält man gut zusammenhaltende ebene und geruchlose Matten, die in allen Prüfungen nach DIN 18 165 Blatt 1 oder Blatt 2 den Werten entsprechen, die mit der gleichen Menge Phenol-Formaldehydharz als Bindemittel erreicht werden oder diese übertreffen (bezogen auf gleiche Mengen organischen Materials).

## Patentanspruch

1. Verfahren zur Herstellung von Mineralfasermatten durch Verklebung von Mineralfasern mit Bindemitteln, dadurch gekennzeichnet, daß als Bindemittel eine Emulsion von Wasserglas und Isocyanat mit einem Isocyanat:Wasserglasverhältnis 1:1 bis 1:20 Gew.-% eingesetzt wird, die in einem vorgeschalteten Mischaggregat hergestellt worden ist.

2. Verfahren nach Anspruch 1 bis 4, dadurch gekennzeichnet, daß Wasserglas mit einem Feststoffgehalt von 40—55 Gew.-% eingesetzt wird.

## Revendications

1. Procédé de production de mats en fibres minérales par collage de fibres minérales avec des liants, caractérisé en ce qu'il consiste à utiliser comme liant une émulsion de verre soluble et d'isocyanate dans un rapport de l'isocyanate au verre soluble de 1:1 à 1:20% en poids, qui a été préparée dans un ensemble mélangeur préalable.

2. Procédé suivant la revendication 1, caractérisé en ce que le verre soluble utilisé a une teneur en matières solides de 40 à 55% en poids.

## Claims

1. A process for the production of mineral fibre mats by bonding mineral fibres with binders, characterised in that an emulsion of water glass and isocyanate having an isocyanate to water glass ratio of from 1:1 to 1:20% by weight, which emulsion has been prepared in a preceding mixer, is used as binder.

2. A process according to claim 1, characterised in that water glass having a solids content of from 40 to 55% by weight is used.